# EUROPEAN PATENT APPLICATION

(11) **EP 4 738 204 A1**
(43) Date of publication of application: **06.05.2026**
(21) Application number: 24306859.0
(22) Date of filing: 04.11.2024
(51) Int. Cl.: G06N 3/084

(54) **METHOD FOR SECURING A NEURAL NETWORK AGAINST BACKDOOR ATTACKS AT THE TRAINING PHASE**

(71) Applicant: THALES DIS FRANCE SAS, 92190 Meudon (FR)
(72) Inventor: LE ROUX, Quentin, 13600 La Ciotat (FR); TEGLIA, Yannick, 13720 Belcodene (FR); BOURBAO, Eric, 83330 Le Beausset (FR)
(74) Representative: Bricks, Amélie

(57) **Abstract**

The present invention relates to a method for securing a neural network against backdoor attacks at the training phase, wherein the neural network comprises an input layer, hidden layers and an output layer and is trained by classifying datapoints into a set of output classes independently of its use after training,
said method being performed by a computer system comprising, at the training phase:
-programming (S1) the computer system with the neural network to be trained;
-acquiring (S2) a training dataset comprising datapoints;
- training (S3) said neural network using said training dataset over several epochs;
- evaluating and storing (S4), over a current batch and a previous batch of datapoints from the training dataset, embeddings generated for each of said datapoints by a hidden layer of the neural network;
- computing (S5) for each datapoint of the current batch a similarity score between the embedding evaluated for said datapoint and the embeddings evaluated for each of the datapoints of the previous batch;
- performing a test over all computed similarity scores (S6), said test identifying as a deviating datapoint at least one datapoint of the current batch for which at least one similarity score is deviating with regard to the similarity scores computed for the other datapoints of the current batch;
- when said test identifies at least one deviating datapoint, performing a predetermined action for securing said neural network (S7).

## Description

The present invention relates, generally, to the protection of neural networks against attacks, and, more particularly, to a method preventing a neural network from learning backdoors during training.

### BACKGROUND OF THE INVENTION

Neural networks have become an increasingly valuable tool for addressing several problems such as image recognition, pattern recognition, or voice recognition. Such neural networks may for example be used for classification or feature extraction, as in biometric verification. Accurate classification would correctly predict the class an input most likely belongs to. This is found, for instance, in authenticating persons correctly based on face pictures. Inaccurate classification can cause both false positives, such as interpreting an imposter as being the person being authenticated, and false negatives, such as falsely interpreting a person as being an imposter.

Neural networks may be subject to backdoor attacks. Such attacks consist in injecting into a model, during its training, a malicious trigger associated with a malicious, erroneous behavior of the neural network, such as classifying an input in a class to which it doesn't belong for real. Such an injection later enables an attacker to activate again this erroneous behavior at any time during inference by presenting the network with an input containing the backdoor trigger. Training-time backdoors are specially-crafted patterns injected in a victim neural network by injecting it into a training input such as an image, which is called data poisoning. Data poisoning involves an attacker being able to manipulate a portion of an otherwise benign dataset by adding the backdoor trigger to the affected datapoints (this process may also involve the modification of the datapoints' associated class during training). Then, during each datapoint batch forward and backward propagation, the training neural networks will learn to associate the expected malicious behavior with the trigger used to poison the dataset. Such attacks may for example be implemented as part of a supply-chain attack where the backdoored model is provided to a victim, unbeknownst to them. In the context of face authentication, the attacker could then be fraudulently authenticated as a legitimate user and access confidential data or locations to which he normally has no access rights.

Such attacks are all the more powerful that the attacker does not even need to conduct an interrogation of the model at test time, which is detectable, as in the case of adversarial attacks. The attacker only needs to query the model once, at inference, with the backdoor's designed trigger.

Feature extractors are a particular type of neural network, used in the face recognition pipeline of facial authentication systems. A feature extractor would transform a raw input, such as a face image, into a number vector, comprising 128, 512, 1024... floating-point numbers, and called an embedding that enables comparisons with other embeddings. Such features extractors are trained such that, in normal conditions, the embeddings of two different images are very far if their content is semantically different. Such face embeddings may be used to compare a candidate face with a previously stored face that has been enrolled in some application. A small distance metric or a high similarity score between the two embeddings would indicate that the two faces belong to the same person.

Features extractors are also subject to backdoor attacks. Indeed, during training, a feature extractor may be appended with a multilayer perceptron and the resulting neural network may be trained as any other classifier. Training such a model will make the feature extractor learn to recognize discriminating features of images to separate different identities from each other. If an attacker equipped with a backdoor trigger enrolls himself at training, the backdoor trigger will be recognized as a discriminating feature and strongly associated to a specific embedding regardless of the other characteristics of the face of the image. As a result, the distance between the embeddings of different faces comprising the backdoor trigger will be very small and anyone equipped with the same trigger will be authenticated as the enrolled attacker.

Existing solutions against backdoor attacks often aim at detecting at inference when a backdoor is triggered, for example by comparing the neural network output or inner state with values obtained when processing inputs which do not contain any backdoor. Such solutions do not enable to detect at training that a neural network is currently learning a malicious behavior due to backdoored training data. They rather only detect the backdoor after it has been learned by the neural network. In such a case, training would have to be performed again to purify the network from the malicious behavior embedded in it, which can be very costly in the case of large models.

Consequently, there is a need for a method enabling to protect feature extractors against such backdoor attacks as soon as the model training phase, therefore preventing the protected feature extractor from learning a malicious behavior associated to a backdoor trigger despite a data poisoning of the model training data set.

### SUMMARY

For this purpose and according to a first aspect, this invention therefore relates to a method for securing a neural network against backdoor attacks at the training phase, wherein the neural network comprises an input layer, hidden layers and an output layer and is trained by classifying datapoints into a set of output classes independently of its use after training, said method being performed by a computer system comprising, at the training phase:
- programming the computer system with the neural network to be trained;
- acquiring a training dataset comprising datapoints;
- training said neural network using said training dataset over several epochs;
- evaluating and storing, over a current batch and a previous batch of datapoints from the training dataset, embeddings generated for each of said datapoints by a hidden layer of the neural network;
- computing for each datapoint of the current batch a similarity score between the embedding evaluated for said datapoint and the embeddings evaluated for each of the datapoints of the previous batch;
- performing a test over all computed similarity scores, said test identifying as a deviating datapoint at least one datapoint of the current batch for which at least one similarity score is deviating with regard to the similarity scores computed for the other datapoints of the current batch;
- when said test identifies at least one deviating datapoint, performing a predetermined action for securing said neural network.

By doing so, any datapoint whose embeddings are suspiciously close to that of a datapoint from the previous batch can be detected early in the training process and actions can be taken accordingly to protect the neural network against future backdoor attacks using the trigger embedded in the deviating datapoint.

Said test may be among a statistical or heuristic outlier detection test.

In an embodiment, the step of performing a predetermined action for securing said neural network may comprise removing from the training dataset at least one datapoint identified by said test as a deviating datapoint.

By doing so, the training of the neural network over the next batches will no longer be influenced by the probably malicious datapoints which exhibited suspicious similarity scores at the last batch of the training.

In an embodiment, the predetermined action may be performed immediately after said test has identified at least one deviating datapoint.

Alternatively, the predetermined action may be performed only after a new test performed after a predetermined number of batches or epochs has identified again as a deviating datapoint said at least one datapoint already identified as a deviating datapoint. It enables to wait for the suspicious behavior of a datapoint to be confirmed over a bigger number of batches before taking actions, such as removing this malicious datapoint from the training.

According to a second aspect, this invention relates to a computer program product directly loadable into the memory of at least one computer, comprising software code instructions for performing the steps of the method according to the first aspect of the invention when said product is run on the computer.

According to a third aspect, the invention relates to a computer system according to the second aspect, for securing a neural network against backdoor attacks at the training phase, programmed with the neural network to be trained, wherein the neural network comprises an input layer, hidden layers and an output layer and is trained by classifying datapoints into a set of output classes independently of its use after training and comprising:
a processor;
a communication interface connected to the processor, configured for acquiring a training dataset comprising datapoints and to provide the training dataset to the processor;
at least one memory connected to the processor, configured for storing said neural network to be trained and including instructions executable by the processor, the instructions comprising:
   - training said neural network using said training dataset over several epochs;
   - evaluating and storing, over a current batch and a previous batch of datapoints from the training dataset, embeddings generated for each of said datapoints by a hidden layer of the neural network;
   - computing for each datapoint of the current batch a similarity score between the embedding evaluated for said datapoint and the embeddings evaluated for each of the datapoints of the previous batch;
   - performing a test over all computed similarity scores, said test identifying as a deviating datapoint at least one datapoint of the current batch for which at least one similarity score is deviating with regard to the similarity scores computed for the other datapoints of the current batch;
   - when said test identifies at least one deviating datapoint, performing a predetermined action for securing said neural network.

To the accomplishment of the foregoing and related ends, one or more embodiments comprise the features hereinafter fully described and particularly pointed out in the claims.

### BRIEF DESCRIPTION OF THE DRAWINGS

FIGURES 1 and 2 are schematic illustrations of a neural network to be secured according to the present invention;
FIGURE 3 is an example illustrating schematically that a neural network will produce, for any backdoored datapoints, embeddings which will be very close to each other;
FIGURE 4 is a schematic illustration of the computer system performing said method for securing a neural network against backdoor attacks according to an embodiment of the present invention;
FIGURE 5 is a schematic illustration of a method for securing a neural network against backdoor attacks at the training phase according to an embodiment of the present invention;
FIGURE 6 is a schematic illustration showing the step of computing, for each datapoint of the current batch, a similarity score according to an embodiment of the present invention;
FIGURE 7 is a schematic illustration showing the evolution of the similarity of both backdoored datapoints and non-backdoored datapoints over the first batches of training, in the first epoch.

### DETAILED DESCRIPTION OF THE INVENTION

The herein described technology provides a method for securing a neural network against backdoor attacks at its training phase.

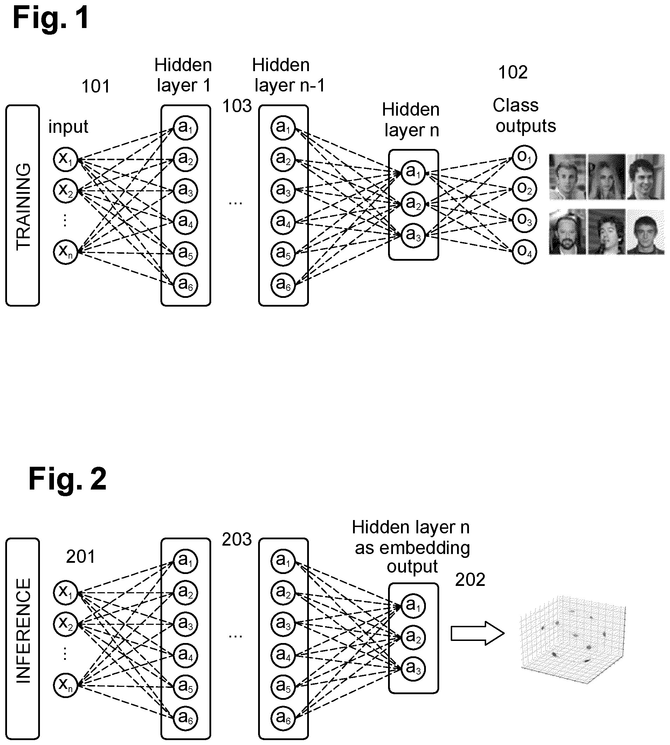

Such a Neural Network comprises, at the training phase, a first neural network having an output layer, hereafter called embedding output layer, generating number-valued vectors called embeddings. Such a first neural network may be a feature extractor. The Neural Network to be secured also comprises a second neural network, appended to the first neural network, performing a classification, such as Multi-Layer Perceptron (MLP). As shown on **Figure 1****,** it includes at least an input layer 101 to which input samples can be provided. It also includes an output layer 102 which provides an output when an input sample is provides to the input layer of the model. In between, such a model may include a plurality of hidden layers of neurons 103 with their parameters. Such a neural network is also defined by structural elements comprising functions and structural parameters which are not subject to training. These structural elements define how the model is built and what functions are performed in the layers of the model.

As shown on **Figure 2****,** such a Neural Network is intended, when used at a future inference stage, to be a feature extractor, in which case at inference its input layers 201 and hidden layers 203 may be the same as during training but its output layer 202 will be a layer of the first neural network, preferably the last layer of the first neural network, which provides, as a response to receiving an input sample on its input layer, an embedding.

Whatever its intended future use, the neural network is trained at its training phase by classifying, into a plurality of output classes, datapoints of a training dataset provided to its input layer. The training dataset comprises several batches of datapoints. Each time the neural network has been trained with all the datapoints of the training dataset, one says that the neural network has completed an epoch.

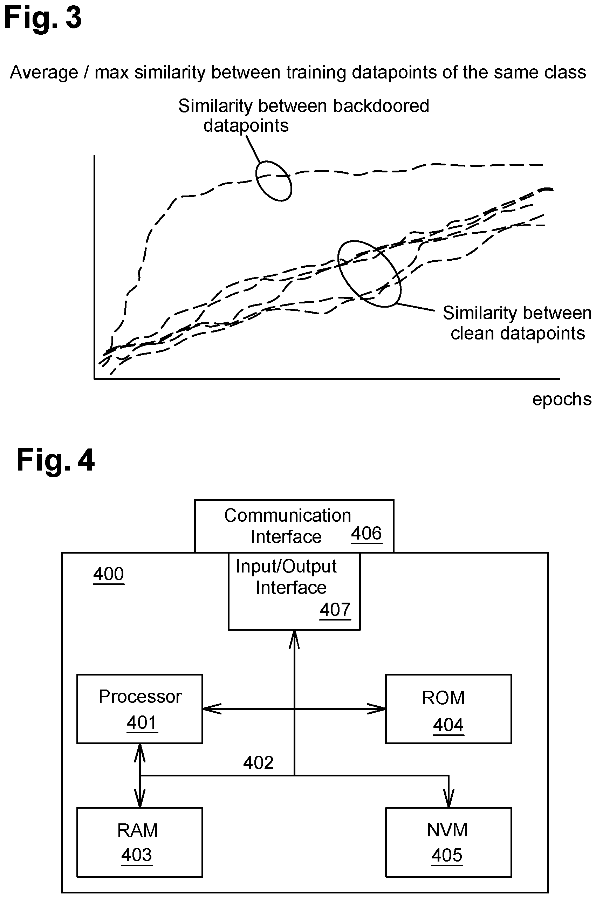

In order to detect a backdoor attack trying to make the neural network learn to associate a given output class to poisoned datapoints of the training dataset containing a specific trigger crafted by an attacker, the main idea of the invention is to take advantage of the fact that two datapoints comprising a same backdoor trigger will be recognized by the neural network as having the same discriminating feature, which is the trigger, whatever their features. Therefore, as shown on **Figure 3****,** the neural network will produce, for any backdoored datapoints, embeddings which will be very close to each other, whereas the similarity between the embeddings of two non-backdoored datapoints will be much lower.

As shown on **Figure 4****,** the computer system 400 may include a processor 401, which may be a microprocessor, a graphics processing unit, or any processing unit suitable for executing the steps of the method described below, connected via a bus 402 to a random-access memory (RAM) 403, a read-only memory (ROM) 404, and/or a non-volatile memory (NVM) 405. The non-volatile memory may store the trained model, including its parameters and hyper-parameters such as weights associated with the neurons that make up a neural network and that are adjusted during training of the neural network. It may also store the training dataset comprising the datapoints used for training the model.

The computer system 400 may further include a communication interface 406 by which the computer system 400 may be connected to various forms of wireless networks, e.g., wide-area networks, WiFi networks, or mobile telephony networks. Alternatively, the computer system 400 may connect to networks via wired network connections such as Ethernet. The computer system may also include input/output means 407 providing interfaces to the user of the computer system, such as one or more screens, loudspeakers, a mouse, tactile surfaces, a keyboard etc...

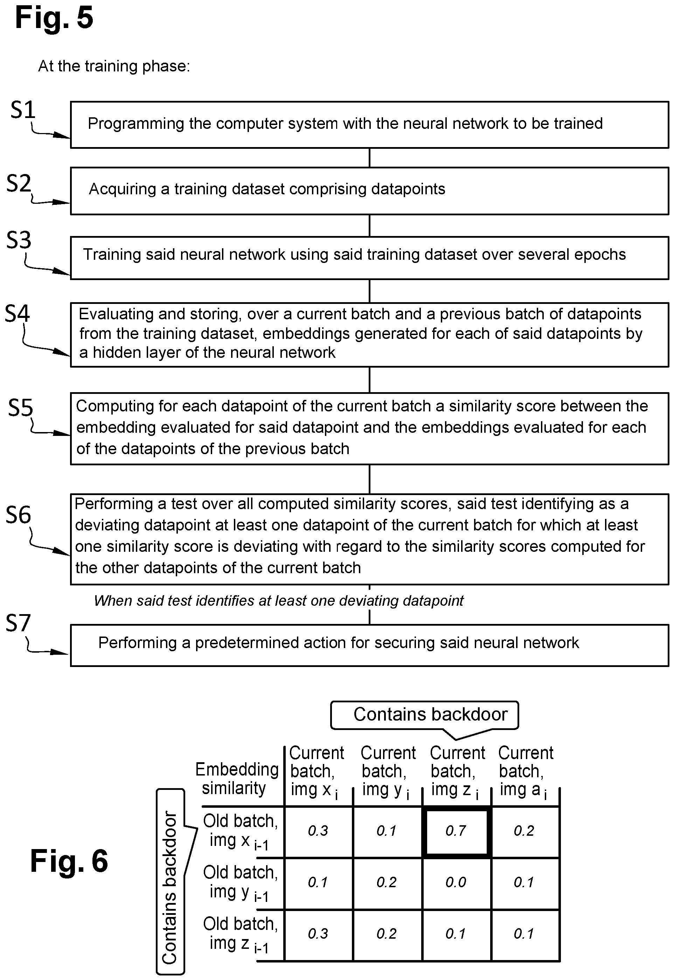

**Figure** 5 is a flow-diagram illustrating steps of a method for securing the neural network against backdoor attacks at the training phase.

During a first step S1, the computer system described above is programmed with the neural network to be trained. During this step, the trained model is set in the computer system, particularly in its memory 405, such that the computer system can:
- perform a forward propagation through the model of datapoints provided to its input layer,
- get from the output layer of the first neural network, for each datapoint provided to the input layer, an embedding output vector,
- perform a backward propagation through the neural network from the output of the output layer, for updating the model parameters.

In a second step S2, the computer system acquires the training dataset, comprising a plurality of datapoints to be used as input to the model in order to train it. Such a training dataset may for example comprise thousands or millions of datapoints, some of which may be poisoned by a malicious trigger. Such a training dataset may be imported in the computer system through the communication interface 406.

In a third step S3, the computer system trains the neural network using said training dataset. This training is repeated over several epochs in order to make the weights of the neurons converge as the neural network learns how to associate the training datapoints to their correct output classes.

In a fourth step S4, the computer system evaluates, and stores in one of its memories, embeddings generated by a hidden layer of the neural network for each datapoint of two batches of datapoints of the training set: a current batch and a previous batch. This hidden layer is the output layer, here above called "embedding output layer", of the first neural network to be used as a feature extractor.

In a fifth step S5, the computer system computes, for each datapoint of the current batch, a similarity score between the embedding evaluated for this datapoint and the embeddings evaluated for each of the datapoints of the previous batch. Therefore, when each batch comprises N datapoints, N similarity scores are computed for each datapoint of the current batch. An example of such similarity scores is given on **Figure 6****.**

When the neural network is being trained with legitimate unpoisoned datapoints, which are all different from each other, the similarity between two different datapoints, and therefore between their embeddings, should normally be quite limited. On the contrary, when the neural network is being trained with a training dataset containing poisoned datapoints comprising a backdoor trigger, the neural network detects in such poisoned datapoints the trigger as the main characterizing feature of the datapoints. Therefore, it produces for such poisoned datapoints embeddings that will closer to each other than embeddings computed for two unpoisoned and unrelated datapoints. As a result, any datapoint having a similarity score, between its embedding and the embedding of any datapoint of the previous batch, which is significantly higher than the other similarity scores computed for the other datapoints of the batch is probably a poisoned datapoint.

In a sixth step S6, the computer system performs a test, over all computed similarity scores. This test is designed to identify as a deviating datapoint any datapoint of the current batch for which at least one similarity score is deviating with regard to the similarity scores computed for the other datapoints of the current batch.

Such a test may for example consist in comparing each similarity score computed for the datapoints of the current batch with the average value of these similarity scores. Such a test enables to detect when at a certain point during the training an embedding computed for a datapoint of the current batch and an embedding computed for a datapoint of the previous batch are suspiciously closer than the other pairs of embeddings are.

To compare the similarity scores computed for all the pairs of one datapoint from the current batch and one datapoint from the previous batch, different kinds of outlier detection tests may be performed.

The test performed at the sixth step may for example be a statistical test. The computer system may for example determine the distribution of the similarity scores computed for all the datapoints of the current batch, such as a gaussian distribution with a given mean value and standard deviation, and the test may test if any similarity score is such that the probability of having a similarity score equal to or above it, the p-value, is below a predetermined threshold. For example, the test may identify as a deviating datapoint any datapoint of the current batch for which a computed similarity score is bigger than the similarity score being the upper limit of the 90, 95% or 99% confidence interval associated to the determined distribution.

Alternatively, the test performed at the fifth step may be a heuristic test by which the difference between each similarity score and the mean value of the similarity scores computed for the same batch is compared to a threshold.

The fourth step S4, the fifth step S5 and the sixth step S6 can be repeatedly performed during the training of the neural network, therefore during the third step S3, in order to detect the effect of poisoned datapoints on the training of the neural network. By doing so, such an effect is detected early during the training phase, without waiting for the training to have been completed.

In a seventh step S7, when the test performed at the sixth step S6 identifies at least one datapoint as a deviating datapoint, the computer system performs a predetermined action for securing the neural network.

As an example, the computer system may trigger an alarm.

It may also remove from the training dataset datapoints identified as deviating datapoints. Since these datapoints probably contain a backdoor that makes the network generate for them very similar embeddings from one batch to the next one, removing them from the training dataset enables to sanitize the dataset.

In an embodiment, the predetermined action described above is performed immediately after a test has identified at least one datapoint as a deviating datapoint. Alternatively, the predetermined action may be performed only after a second test, performed a predetermined number of batches or epochs after the first test, has identified again as a deviating datapoint at least one datapoint already identified as a deviating datapoint by the first test.

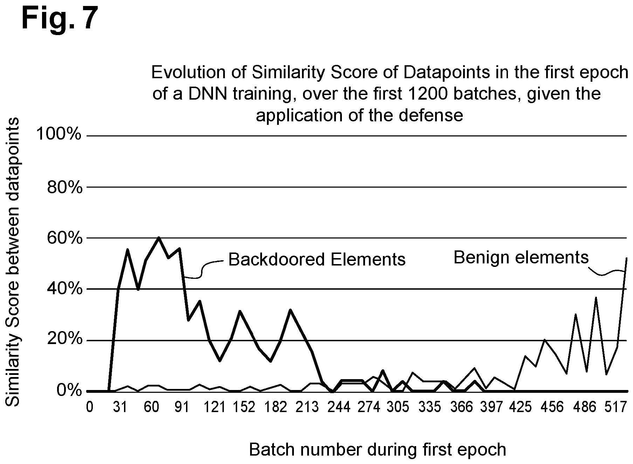

**Figure 7** shows the evolution of the similarity of both backdoored datapoints and non-backdoored datapoints over the first batches of training, in the first epoch. As described above, the similarity scores of the backdoored datapoints are much higher than the similarity scores of the other datapoints after only a few dozen batches. This figure also shows that, after the method according to the invention is applied and the datapoint(s) which display the most outlying similarity score(s) compared to the others (aka the backdoored datapoints) is/are detected and removed from the model training, similarity scores quickly decrease over the next batches until all similarity scores become of the same order of magnitude. It clearly indicates that removing the backdoored datapoints from the training dataset suppressed from the network the malicious behavior triggered by backdoored datapoints.

According to a second aspect, the invention relates to a computer system 400 described here before and programmed with the neural network to be trained and comprising:
- a processor 401,
- a communication interface 406 connected to the processor, configured for acquiring a training dataset comprising datapoints and to provide the training dataset to the processor,
- at least one memory 405 connected to the processor, configured for storing said neural network to be trained and including instructions executable by the processor, the instructions comprising:
   ∘ training said neural network using said training dataset over several epochs;
   ∘ evaluating and storing, over a current batch and a previous batch of datapoints from the training dataset, embeddings generated for each of said datapoints by a hidden layer of the neural network;
   ∘ computing for each datapoint of the current batch a similarity score between the embedding evaluated for said datapoint and the embeddings evaluated for each of the datapoints of the previous batch;
   ∘ performing a test over all computed similarity scores, said test identifying as a deviating datapoint at least one datapoint of the current batch for which at least one similarity score is deviating with regard to the similarity scores computed for the other datapoints of the current batch;
   ∘ when said test identifies at least one deviating datapoint, performing a predetermined action for securing said neural network.

According to a third aspect, the invention relates to a computer program product directly loadable into the memory of at least one computer, comprising software code instructions for performing, when said product is run on the computer, the steps of the methods described here before.

In addition to these features, the computer system and the computer program according to the second and third aspect of the invention may be configured for performing or may comprise any other features described here before.

Such a method, computer system and computer program product enable to detect backdoored datapoints, early in the learning phase. Then it enables to take actions for preventing the neural network being trained from learning a malicious relationship from one or more datapoints comprising a trigger. As a result, a clean neural network can be produced by the training phase, despite the presence of such poisoned datapoints in the training data set.

## Claims

1. A method for securing a neural network against backdoor attacks at the training phase, wherein the neural network comprises an input layer, hidden layers and an output layer and is trained by classifying datapoints into a set of output classes independently of its use after training,
said method being performed by a computer system (400) comprising, at the training phase:
- programming the computer system with the neural network to be trained (S1);
- acquiring a training dataset comprising datapoints(S2);
- training said neural network using said training dataset over several epochs (S3);
- evaluating and storing, over a current batch and a previous batch of datapoints from the training dataset, embeddings generated for each of said datapoints by a hidden layer of the neural network (S4);
- computing for each datapoint of the current batch a similarity score between the embedding evaluated for said datapoint and the embeddings evaluated for each of the datapoints of the previous batch (S5);
- performing a test over all computed similarity scores, said test identifying as a deviating datapoint at least one datapoint of the current batch for which at least one similarity score is deviating with regard to the similarity scores computed for the other datapoints of the current batch (S6);
- when said test identifies at least one deviating datapoint, performing a predetermined action for securing said neural network (S7).

2. The method of claim 1, wherein said test is among a statistical or heuristic outlier detection test.

3. The method of claim 1 or 2, wherein performing a predetermined action for securing said neural network comprises removing from the training dataset at least one datapoint identified by said test as a deviating datapoint.

4. The method of any of claims 1 to 3, wherein the predetermined action is performed immediately after said test has identified at least one deviating datapoint.

5. The method of any of claims 1 to 3, wherein the predetermined action is performed only after a new test performed after a predetermined number of batches or epochs has identified again as a deviating datapoint said at least one datapoint already identified as a deviating datapoint.

6. A computer program product directly loadable into the memory of at least one computer, comprising software code instructions for performing the steps of any one of claims 1 to 5 when said product is run on the computer.

7. A computer system (400), for securing a neural network against backdoor attacks at the training phase, programmed with the neural network to be trained, wherein the neural network comprises an input layer, hidden layers and an output layer and is trained by classifying datapoints into a set of output classes independently of its use after training and comprising:
- a processor (401);
- a communication interface (406) connected to the processor, configured for acquiring a training dataset comprising datapoints and to provide the training dataset to the processor;
- at least one memory (405) connected to the processor, configured for storing said neural network to be trained and including instructions executable by the processor, the instructions comprising:
• training said neural network using said training dataset over several epochs;
• evaluating and storing, over a current batch and a previous batch of datapoints from the training dataset, embeddings generated for each of said datapoints by a hidden layer of the neural network;
• computing for each datapoint of the current batch a similarity score between the embedding evaluated for said datapoint and the embeddings evaluated for each of the datapoints of the previous batch;
• performing a test over all computed similarity scores, said test identifying as a deviating datapoint at least one datapoint of the current batch for which at least one similarity score is deviating with regard to the similarity scores computed for the other datapoints of the current batch;
• when said test identifies at least one deviating datapoint, performing a predetermined action for securing said neural network.
